# EUROPÄISCHE PATENTSCHRIFT

(11) **EP 0 628 798 B1**
(45) Veröffentlichungstag und Bekanntmachung des Hinweises auf die Patenterteilung: **14.05.1997**
(21) Anmeldenummer: 93109114.4
(22) Anmeldetag: 07.06.1993
(51) Int. Cl.: G01M 1/22

(54) **Verfahren zum Ausblenden nicht relevanter Messwerte bei einem Unwuchtmesssignal**
Procedure for eliminating non-relevant measuring values from an imbalance measuring signal
Procédé d'élimination des valeurs de mesure non-utiles d'un signal de mesure de balourd

(43) Veröffentlichungstag der Anmeldung: 14.12.1994
(73) Patentinhaber: SCHENCK RoTec GmbH, D-64293 Darmstadt (DE)
(72) Erfinder: Gnielka, Peter, Dr., W-6100 Darmstadt (DE); Tews, Volker, Dr., W-6100 Darmstadt (DE); Guyot, Volker, W-6081 Büttelborn (DE)
(74) Vertreter: Brandt, Ernst-Ulrich, Dipl.-Phys., Dipl.-Ing.

(56) Entgegenhaltungen:
- EP-A- 0 182 933
- EP-A- 0 392 185
- EP-A- 0 499 297
- PATENT ABSTRACTS OF JAPAN vol. 14, no. 293 (P-1066)25. Juni 1990 & JP-A-02 091 522 (MEIDENSHA CORP) 30. März 1990

## Beschreibung

Die Erfindung betrifft ein Verfahren zum Ausblenden nicht relevanter Meßwerte für ein, aus einer Vielzahl von Meßwerten bestehendes, Unwuchtsignal sowie eine Schaltungsanordnung zur Durchführung des Verfahrens.

Bei der Bestimmung der Unwucht eines Körpers nach Winkellage und Größe wird angestrebt, lediglich die von der Wirkung der Unwucht herrührenden Schwingungen und deren Lage zu einem Bezugspunkt möglichst fehlerfrei zu erhalten. Die von der Unwucht herrührenden Schwingungen sind jedoch stets überlagert von sogenannten Störschwingungen, welche beispielsweise vom Antriebsmotor und auch von der Lagerung der Auswuchtmaschine selbst hervorgerufen werden können. Zur Ausblendung derartiger Störschwingungen, zu welchen auch Schwingungen gehören, die beim Beschleunigen oder beim Verzögern des auszuwuchtenden Körpers auftreten, hat man bisher den gesamten Meßbereich unterteilt in einen Anfahrbereich, bei welchem nicht gemessen wurde, einen Meßbereich, in welchem die Unwuchtwirkungen und deren Lage zu einem Bezugspunkt aufgenommen wurden und der sich über eine bestimmte Zeit erstreckte, und an den sich ein Bremsbereich anschloß, in dem ebenfalls nicht gemessen wurde (DE-A-16 48 336).

Bei einer anderen Methode (DE-A-33 42 542) wurde zur Vermeidung von Störschwingungen der komplette Meßvorgang nicht bewertet, wenn sich herausstellt, daß durch Fremdeinflüsse aufgetretene Störschwingungen die Unwuchtmessung beeinflußten.

Nach den im Stand der Technik durchgeführten Messungen, ist es im Falle der DE-A-16 48 336 nicht auszuschließen, daß durch unvorhergesehene Störeinflüsse während des Meßzyklus eine Fehlmessung auftritt, aufgrund der, insbesondere bei der Massenfertigung, ein derartig, vermessener rotierbarer Körper als nicht verwendbar ausgeschieden wird, obwohl die im Körper vorhandene Unwucht noch in einem Bereich liegt, welche eine Verwertung des Körpers zugelassen hätte. Derartige Fehlmessungen treten nicht nur bei der Vermessung von Massengütern auf, die in einer oder in zwei Ebenen ausgewuchtet werden, sondern auch bei rotierbaren Bauteilen, beispielsweise bereiften Fahrzeugrädern, die zur Unterdrückung von durch die Unwucht hervorgerufenen Schwingungen im Fahrzeug in bestimmten Abständen nachgewuchtet oder erneut ausgewuchtet werden müssen.

Im Falle der DE-A-33 42 542 wird zwar bei Überschreiten einer zugelassenen Störgröße das komplette Meßergebnis annulliert, erfordert jedoch, dann zwingend eine weitere Messung, bei der ebenfalls nicht auszuschließen ist, daß bei dieser nicht wieder Störgrößen, die zur Annullierung des Meßwertes führen, auftreten. Dies führt zwangsläufig zu einem nicht vertretbaren Zeitaufwand bei der Messung. Aus EP-A-0 392 185 ist eine Vorrichtung bekannt, die mittels eines neuronalen Netzwerks Unwicht daten analysiert. JP-A-2 091 522 beschreibt eine Vorrichtung, inder einen rotierender Stab, auf dem ein Gewicht gelegt wurde, mittels Fuzzy-Logik wieder ausbalanciert wird.

Bei beiden Meßmethoden ist es darüberhinaus nicht möglich, Störschwingungen, insbesondere auch im Anfahrbereich, welche in den Meßbereich hineinreichen können und so eine Fehlmessung verursachen festzustellen und als nicht relevante Meßwerte auszublenden.

Ausgehend hiervon liegt der Erfindung die Aufgabe zugrunde, mit Hilfe einer mit Fuzzyerkenntnissen arbeitenden Logik unerwartete Störungen während einer Feststellung der Unwuchtwirkungen eines rotierbaren Körpers zu berücksichtigen.

Diese Aufgabe wird mit dem erfinderischen Kennzeichen des Verfahrensanspruchs 1 gelöst. Hierbei erkennt die mit Fuzzyerkenntnissen arbeitende Logik den etwaigen zu erwartenden Verlauf des Unwuchtmeßsignals, welcher sich als sinusförmige Schwingung darstellt und greift dann in den Meßvorgang ein, wenn der etwa erwartete Verlauf des Unwuchtmeßsignals gestört wird durch stark abweichende Einzelmeßwerte dergestalt, daß die Einzelmeßwerte als nicht relevante Meßwerte auch nicht zur Bestimmung der Unwuchtwirkung herangezogen werden können, sondern auszublenden sind. Der Meßvorgang selbst läuft jedoch weiter, und es wird die Ausblendung dann zurückgenommen oder verringert, wenn die Abweichung des Einzelmeßwerts in ihrer Tendenz sich dem zugelassenen Bereich des zu erwartenden Verlaufs zuneigt. Damit wird erreicht, daß zum einen keine Fehlmessung in der Unwuchtwirkung auftritt und daß zum anderen die Bestimmungszeit für die Unwuchtwirkung durch Ausschaltung stark abweichender Einzelmeßwerte nicht beeinflusst wird. Weiterhin ist dieses erfinderische Verfahren, insbesondere auch einsetzbar im Anfahrbereich einer Auswuchtmaschine, wenn beispielsweise durch Störungen in der Stromversorgung, oder bei dem nach dem Meßvorgang erfolgten Abbremsen des zu untersuchenden Körpers, beispielsweise verspätetes Lösen einer Bremse nach dem Wiederanfahren der Auswuchtmaschine, Fehler auftreten können, die sich auch noch im Zeitraum der reinen Messung bemerkbar machen. Bei einem derartigen Fall, verspätetes Lösen der Bremse, würde die mit Fuzzyerkenntnissen arbeitende Logik zusätzlich die Möglichkeit beinhalten, den Antriebsmotor einer Auswuchtmaschine, ohne einen Meßvorgang durchzuführen, beispielsweise sofort stillzusetzen.

Die in Anspruch 2 unter Schutz gestellte Ausgestaltung, daß die mit Fuzzyerkenntnissen arbeitende Logik eine unscharfe Bandbreite vom etwaigen Verlauf des Unwuchtmeßsignals zuläßt, ist dann anwendbar, wenn auch während des Betriebs des ausgewuchteten rotierbaren Körpers eine gewisse Restunwucht verbleiben kann, ohne daß eine Störung des Betriebs auftritt.

In diesem Falle wird eine Optimierung der Auswuchtergebnisse mit Hilfe der mit Fuzzyerkenntnissen arbeitenden Logik erreicht.

In noch weiterer Ausgestaltung des Erfindungsgegenstandes gemäß Anspruch 3 wird vorgeschlagen, daß die mit Fuzzyerkenntnissen arbeitende Logik nach Beginn der Messung während eines im wesentlichen zu erwartenden konstanten Amplitudenverlaufs der zeitlich nacheinander folgenden Meßwerte in Abhängigkeit der einzelnen Amplitudengrößen ein Unschärfeauswahlverfahren durchführt, ob der einzelne Amplitudenmeßwert zur Bildung des Unwuchtmeßsignals zugelassen wird. Diese erfinderische Verfahrensregel wird dann eingesetzt, wenn durch andere Mittel die Gewähr bereits gegeben ist, daß während der Hochlaufzeit und während der Bremszeit keine Überwachung mit einer mit Fuzzyerkenntnissen arbeitenden Logik erforderlich ist. Die nach dieser erfinderischen Methode auf Unwuchtwirkung vermessenen rotierbaren Körper, zeichnen sich insbesondere dadurch aus, daß Störschwingungen keinen rotierbaren Körper als Ausschuß deklarieren, wenn seine Unwuchtwirkungen noch innerhalb der zugelassenen Unwuchtwirkung liegen.

In noch weiterer Ausgestaltung dieses Verfahrens wird vorgeschlagen, daß der Meßwert in Abhängigkeit der mit Fuzzyerkenntnissen arbeitenden Logik noch modifiziert wird. Damit läßt sich die Bandbreite der zugelassenen Restunwucht bei gleichbleibender Güte ohne zusätzlichen Zeitaufwand beachtlich verringern.

Ausgehend von einer Schaltungsanordnung zur Bestimmung der einem rotierbaren Körper anhaftenden Unwucht in mindestens einer Meßebene mit mindestens einem Schwingungsumformer und einem Winkellagengeber zur Verarbeitung des Unwuchtmeßsignals, einer Anzeigeeinrichtung zur Anzeige der Unwucht nach Lage und Größe und/oder einer Bearbeitungseinrichtung zur Weiterverarbeitung der Unwucht, zur Durchführung des erfinderischen Verfahrens wird gemäß kennzeichnenden Merkmalen des Anspruchs 5 deren erfinderische Ausgestalung darin gesehen, daß von der mit Fuzzyerkenntnissen arbeitenden Logikeinheit die vom Schwingungsumformer abgegebenen Unwuchtmeßsignale unmittelbar verarbeitet werden.

Hierdurch werden die von einem Schwingungsumformer, bei dem es sich auch um eine Kraftmessung mittels Piezoaufnehmern oder einen Schwingwegmesser handeln kann, ausgehenden Unwuchtrohwerte sofort von der mit Fuzzyerkenntnissen arbeitenden Logik verarbeitet; Störeinflüsse können also nicht auftreten.

Das Verfahren läßt sich auch ausgehend von einer Schaltungsanordnung zur Bestimmung der einem rotierbaren Körper anhaftenden Unwucht in mindestens einer Meßebene mit mindestens einem Schwingungsumformer und einem Winkellagengeber zur Verarbeitung des Unwuchtmeßsignals, einer Anzeigeeinrichtung zur Anzeige der Unwucht nach Lage und Größe und/oder einer Bearbeitungseinrichtung zur Weiterverarbeitung der Unwucht zur Durchführung des erfinderischen Verfahrens, gemäß Anspruch 6 dadurch lösen, daß zwischen dem Ausgang des Schwingungsumformers und dem Eingang der mit Fuzzyerkenntnissen arbeitenden Logikeinrichtung mindestens ein Anpassverstärker für das Unwuchtmeßsignal vorgesehen ist.

Das erfinderische Verfahren läßt sich auch ausgehend von einer Schaltungsanordnung zur Bestimmung der einem rotierbaren Körper anhaftenden Unwucht in mindestens einer Meßebene mit mindestens einem Schwingungsumformer und einem Winkellagengeber zur Verarbeitung des Unwuchtmeßsignals, einer Anzeigeeinrichtung zur Anzeige der Unwucht nach Lage und Größe und/oder einer Bearbeitungseinrichtung zur Weiterverarbeitung der Unwucht dadurch lösen, daß die vom Schwingungsumformer ausgehende Information zum einen über einen mit Fuzzyerkenntnissen arbeitende Logikeinrichtung geführt wird und anschließend an eine Einrichtung zur Meßwertverarbeitung weiter gegeben wird und zum anderen die Information des Schwingungsumformers über einen Anpassverstärker und/oder einen Vorfilter an die Einrichtung zur Meßwertverarbeitung weiter gegeben wird und daß die Meßwertverarbeitung in Abhängigkeit der mit Fuzzyerkenntnissen beeinflußten Werte geschieht. Hiermit wird erreicht, daß erst innerhalb der Einrichtung zur Meßwertverarbeitung die mit Fuzzyerkenntnissen arbeitende Logik zum Einsatz kommt und damit auch alle eventuellen Fehlergrößen im Aufbereitungsstrang nicht berücksichtigt, da die mit Fuzzyerkenntnissen arbeitende Logik die unerwarteten Störeinflüsse völlig getrennt von dem Aufbereitungsstrang erst in der Einrichtung zur Meßwertverarbeitung zur Geltung bringt.

Eine Ausgestaltung der Schaltungseinrichtung wird darin gesehen, daß je eine Speichereinrichtung zwischen den mit Fuzzyerkenntnissen aufbereiteten Werten den über Anpassverstärker und Vorfilter kommenden Werten und den vom Winkellagengeber kommenden Werten und der Einrichtung zur Meßwertverarbeitung angeordnet ist. Eine derartige Speicheranordnung in jedem Strang zur Meßwertverarbeitung vorzusehen, bringt insbesondere dann Vorteile, wenn der Meßvorgang für den rotierenden Körper an einer anderen Stelle geschieht als dessen Bearbeitungsvorgang; auch kann derartiges Speichern dazu dienen, verschiedene Arbeitsgeschwindigkeiten in den verschiedenen Strängen aufeinander abzustimmen.

In Ausgestaltung dieser Schaltungsanordnung wird gemäß Anspruch 7 vorgeschlagen, daß nach dem mindestens einen Anpassverstärker eine weitere Einrichtung zur Vorfilterung vorgesehen ist und daß der das derart vorbereitete Unwuchtmeßsignal abgebende Ausgang dieser Einrichtung mit der mit Fuzzyerkenntnissen arbeitenden Logikeinrichtung zur Verarbeitung dieses Unwuchtmeßsignals verbunden ist. Durch den erfindungsgemäßen Einsatz eines Anpassverstärkers kann die Ausgangspannung des Schwingungsumformers an die mit Fuzzyerkenntnis arbeitende Logikeinrichtung angepaßt werden und der Einsatz einer Vorfilterung ist insbesondere dazu geeignet, eine digitale Filterung (Antialisierung) zu ermöglichen.

Durch die Erfindung wird es erstmals ermöglicht, von außen auf die Auswuchtmaschine einwirkende Störungen, wie Vorbeifahren von Gabelstaplern, Bohrbeginn auf einer mit der Auswuchtmaschine verketteten Ausgleichsmaschine, aus dem der rotierbaren Körper anhaftenden Unwucht eindeutig zu eliminieren, ohne neue Meßläufe durchführen zu müssen oder ohne die Meßzeit beachtlich zu erhöhen.

In der nachfolgenden Beschreibung wird die Erfindung anhand einer schematischen Darstellung einer Auswuchtmaschine einschließlich elektrischer Schaltung näher erläutert. Bei Ersatz der dort bezeichneten Bauteile durch gleichwirkende nicht dargestellte Bauteile erstreckt sich der Schutzumfang der Erfindung auch auf derartige Schaltungsanordnungen.

Es zeigen:
- Figur 1:: eine schematische Darstellung der wesentlichen Bauteile einer Auswuchtmaschine bestehend aus Motor, Winkellagengeber, Kupplung, Lager und Schwingungsumformern einschließlich zu untersuchendem Körper
- Figur 2a:: ein vom Schwingungsumformer geliefertes Signal, welches durch eine mit Fuzzyerkenntnissen arbeitende Logikeinrichtung bearbeitet wird und an einen Anpassungsverstärker weitergegeben wird
- Figur 2b:: ein durch den Anpassverstärker angepaßtes Signal, welches anschließend von einer mit Fuzzyerkenntnissen arbeitenden Logik weiter verarbeitet wird
- Figur 2c:: ein durch Anpassverstärker und Vorfilter erhaltenes Signal, welches anschließend von einer mit Fuzzyerkenntnissen arbeitenden Logik weiter behandelt wird
- Figur 3a:: eine Anordnung zur Meßwertverarbeitung mit angeschlossener Anzeige und/oder Bearbeitungsmitteln zur Beseitigung der festgestellten Unwucht
- Figur 3b:: Eine andere Anordnung zur Meßwertverarbeitung, bei der die Verarbeitung der Meßwerte in Abhängigkeit der mit Fuzzyerkenntnissen arbeitenden Logikeinrichtung erfolgt.

Gleiche Bauteile werden bei der nachfolgenden Beschreibung, auch wenn sie verschiedenen Figuren zugeordnet sind, mit denselben Bezugsziffern bezeichnet.

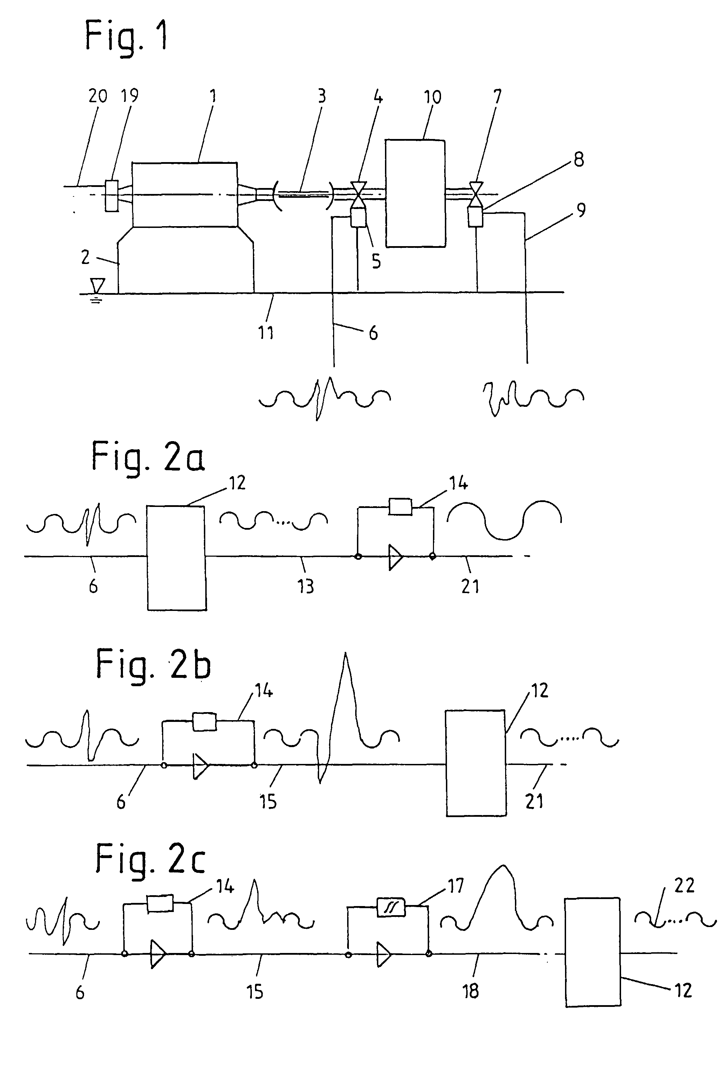

Im Ausführungsbeispiel gemäß Figur 1 treibt ein Antriebsmotor 1, welcher auf einem Sockel 2 auf einem Fundament aufsteht über eine Verbindungswelle 3 einen rotierbaren Körper 10 an. Der rotierbare Körper 10 ist in einem linken Lager 4 und in einem rechten Lager 7 gelagert. Mit dem linken Lager 4 ist ein linker Schwingungsumformer 5 und mit dem rechten Lager 7 ist ein rechter Schwingungsumformer 8 verbunden.

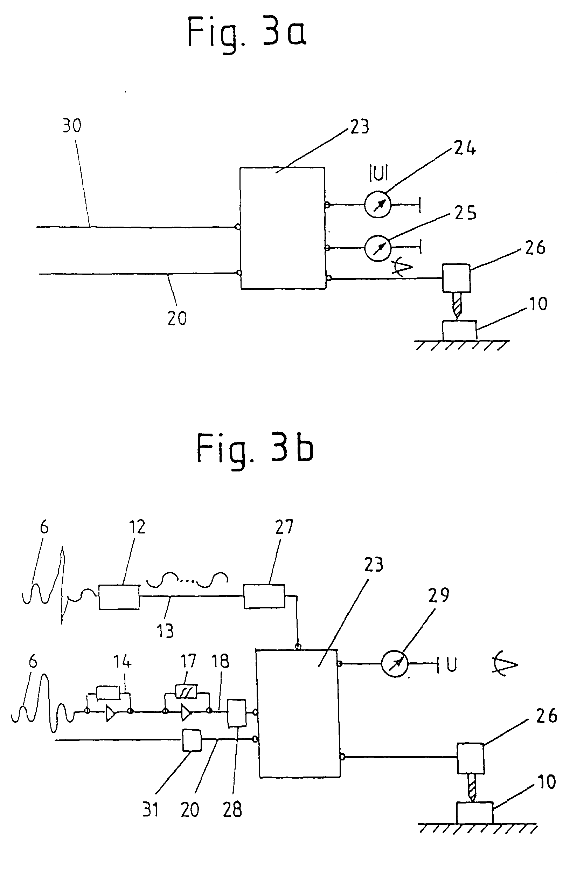

Bei den Schwingungsumformern kann es sich um Kraft,-Weg-Geschwindigkeits- oder Beschleunigungsaufnehmer handeln, welche ihre Signale an Weiterverarbeitungseinrichtungen weitergeben. So wird vom linken Schwingungsumformer 5 ein Meßsignal links 6 weitergegeben und vom rechten Schwingungsumformer 8 ein Meßsignal rechts 9 weitergegeben. Die weitere Verarbeitung der Meßsignale wird in den Figuren 2a bis 2c und 3a und 3b näher erläutert. Es wird im wesentlichen das Meßsignal links 6 in den Figuren 2a bis c und 3a,b in seiner Weiterverwertung dargestellt. Diesselbe Verarbeitung ist auch für das Meßsignal rechts 9 durchzuführen, wenn es sich um eine Zweiebenen-Auswuchtung handelt.

Anstelle der in diesem Ausführungsbeispiel nach Figur 1 beschriebenen Auswuchtung, kann das Verfahren gemäß der Erfindung erfindungsgemäß auch beim Mehrebenenauswuchten wie dem Auswuchten von Kardanwellen oder beim Auswuchten elastischer Rotoren eingesetzt werden.

Anstelle der im Ausführungsbeispiel nach Figur 1 dargestellten Auswuchteinrichtung mit einer Zweiebenen-Auswuchtung kann auch bei schmalen Rotationskörpern eine Einebenen-Auswuchtung durchgeführt werden.

Gemäß Figur 2a wird z. B. das Meßsignal links 6, welches außer dem dort gezeigten sinusförmigen Verlauf, welcher aus einzelnen Meßwerten zusammengesetzt wird, eine durch eine Störung hervorgerufene wesentliche Überhöhung im Signalverlauf dargestellt. Diese Überhöhung stammt nicht von den Unwuchtschwingungen, welche im rotierbaren Körper 10 vorhanden sind, sondern diese Störschwingung bzw. dieser Störimpuls kann durch einen vorbeifahrenden Gabelstapler an der Auswuchtmaschine oder durch das Abstellen eines schweren Geräts in der Nähe der Auswuchtmaschine oder bei Radauswuchtmaschinen beispielsweise durch mechanische Einwirkung auf den Ständer der Radauswuchtmaschine hervorgerufen werden.

Anstelle der einen Störung können auch mehrere Störungen bestehend aus mehreren Störschwingungen bzw. Störimpulsen auftreten.

Derartige Störungen wurden gemäß dem Stand der Technik in der Weise eleminiert, daß in diesem Falle die komplette Messung abgebrochen und erneut wiederholt werden mußte, was zwangsläufig zu einer Verlängerung des Meßvorgangs führte.

Das mit dem Störsignal versehene Meßsignal links 6 wird nunmehr einer mit Fuzzyerkenntnissen arbeitenden Logikeinheit 12 zugeführt. Dort wird der über das Band überschießende Störimpuls derart verarbeitet, daß beispielsweise in Abhängigkeit des Abklingens der Störschwingung bereits eine Weiterverarbeitung stattfinden kann, auch wenn noch nicht die Grenze des Bandbereichs von außen erreicht ist. Es wird also die anstehende Messung nicht als Fehlmessung insgesamt annulliert, sondern es wird gegenüber der bisherigen Art von Messungen eine Verkürzung der Meßzeit erreicht.

Es ist vorstellbar, daß auch im Anfahrbereich für die Auswuchtmaschine, d. h. vor Erreichen der Meßdrehzahl Störschwingungen auftreten, welche gegebenenfalls noch bis in die Meßzeit hineinreichen; auch in diesem Falle ist durch Einsatz der mit Fuzzyerkenntnissen arbeitenden Logikeinheit 12 entweder ein sofortiges Abstoppen der Auswuchtmaschine möglich, so daß praktisch keine Meßzeit verlorengeht oder entsprechend der Beschaltung der mit Fuzzyerkenntnissen arbeitenden Logikeinheit 12 ein Durchführen der Messung möglich bei Erhalt eines Unwuchtmeßwertes, der unabhänig von der im Anlaufbereich erfolgten Störschwingung ist.

Gemäß Figur 2a wird nach der mit Fuzzyerkenntnissen arbeitenden Logikeinheit 12 ein beeinflußtes Signal 13 an einen Anpassverstärker 14 weitergegeben und dieses als angepaßtes beeinflußtes Signal 21 weitergegeben.

Zur Verdeutlichung ist bei dem beeinflußten Signal 13 ein Punktebereich angegeben, durch welchen noch einmal dargestellt werden soll, daß mit der mit Fuzzyerkenntnissen arbeitenden Logikeinheit 12 nicht nur ein eindeutiges Ausblenden des kompletten Störsignals erreicht wird, sondern daß, soweit möglich, das Störsignal noch mit verwendet wird.

Bei der in Figur 2b dargestellten Einflußnahme der mit Fuzzyerkenntnissen arbeitenden Logikeinheit 12 wird das Meßsignal links 6, welches mit Störschwingungen versehen ist, zunächst über einen Anpassverstärker 14 geschickt, dort entsprechend verstärkt als angepaßtes Signal 15, der mit Fuzzyerkenntnissen arbeitenden Logikeinheit 12 zugeführt und verläßt als angepaßtes beeinflußtes Signal 21 die mit Fuzzyerkenntnissen arbeitende Logikeinheit 12. Auch hier ist durch den punktierten Bereich auf die Einflussnahme der mit Fuzzyerkenntnissen arbeitenden Logikeinheit 12 hingewiesen.

Gemäß Figur 2c wird das mit einem Störsignal versehene Meßsignal links 6 zunächst über den Anpaßverstärker 14 mit dem daraus entstehenden angepaßten Signal 15 einem Vorfilter 17 zugeführt, aus welchem ein noch mit einer Störung versehenes vorgefiltertes Signal 18 entlassen wird. Dieses Signal wird der mit Fuzzyerkenntnissen arbeitenden Logikeinheit 12 zugeführt und verläßt diese Einheit als beeinflußtes Signal 22; auch hier deutet der punktierte Bereich auf den Einfluß der mit Fuzzyerkenntnissen arbeitenden Logikeinheit 12 hin.

In Figur 3 wird nunmehr beispielhaft dargestellt, wie die derart aufbereiteten Signale in einer Einrichtung zur Meßwertverarbeitung 23 weiter verarbeitet werden. Die Meßsignale 21 oder 22 werden über eine Leitung 30 der Einrichtung zur Meßwertverarbeitung 23 zugeführt. Gleichzeitig wird ein Winkellagengebersignal 20 ebenfalls der Einrichtung zur Meßwertverarbeitung 23 zugeführt. Das Winkellagengebersignal 20 (vergleiche Figur 1) wird mittels eines Winkellagengebers 19, der beispielsweise am Antriebsmotor 1 angeordnet ist, erzeugt.

Nach Verarbeitung der über die Leitung 30 kommenden Information mit dem Winkellagengebersignal 20 in der Einrichtung zur Meßwertverarbeitung 23, stehen an deren Ausgängen die Meßwerte für die Unwucht gemäß Figur 3, beispielsweise der Betrag für die Unwucht in einer Größenanzeige 24 zur Verfügung und die Aussage über den Winkel, welche die Unwuchtwirkung zu einer Nullmarke am Wuchtkörper einnimmt in einer Anzeigeeinrichtung 25 zur Verfügung. Darüberhinaus kann zu den Anzeigeeinrichtungen 24 und 25 auch noch eine Bearbeitungseinrichtung 26 treten, bei der entweder unter Berücksichtigung der in den Anzeigegeräten dargestellten Größen die Unwucht am rotierbaren Körper 10 beseitigt wird und zwar in einer oder in zwei Ebenen. Es kann jedoch auch ohne Anzeige der Unwucht nach Winkellage und Größe die Bearbeitungseinrichtung 26 direkt mit den Unwuchtergebnissen beaufschlagt werden, so daß ohne Anzeige eine Beseitigung der Unwucht am rotierbaren Körper 10 durchgeführt wird. Auch kann anstelle einer durch Materialwegnahme oder Zugabe durchzuführenden Unwuchtbearbeitung beispeilsweise durch Farbkennungen entweder eine Klassifizierung des rotierbaren Körpers 10 in Gut und Ausschuß durchgeführt werden oder es kann eine Markiereinrichtung vorgesehen sein, die an der Ausgleichsstelle durch Aufdrucken einer Zahl vorschreibt, mit welchem Gewicht an dieser Stelle die Unwucht ausgeglichen werden kann. Auch sind Kombinationen der beschriebenen Anzeige und Bearbeitungsmöglichkeiten gegeben so z. B. bei einer Radwuchtmaschine, daß bei polarer Anzeige des Winkels in einem Anzeigegerät das zum Ausgleich erforderliche Ausgleichsgewicht z. B. 20 Gramm angezeigt wird.

Bei dem in Figur 3b dargestellten Ausführungsbeispiel einer Meßsignalverarbeitung wird der Einrichtung zur Meßwertbearbeitung 23 das Meßsignal links 6, welches mit Störungen versehen ist, einmal über den Anpassverstärker 14 und das Vorfilter 17 als vorgefiltertes Signal 18 gegebenenfalls über einen Speicher für angepaßtes vorverstärktes Signal 28 der Einrichtung zur Meßwertverarbeitung 23 zugeführt.

Dieser Einrichtung zur Meßwertverarbeitung 23 wird ebenso das vom Winkellagengeber 19 erzeugte Winkellagengebersignal 20 gegebenenfalls über einen Zwischenspeicher 31 zugeführt.

Weiterhin wird das mit einer Störung behaftete Meßsignal links 6 der mit Fuzzyerkenntnissen arbeitenden Logikeinheit 12 getrennt zugeführt und verläßt diese Logikeinheit als beeinflußtes Signal 13, wobei auch hier der punktierte Bereich anzeigt, daß in der mit Fuzzyerkenntnissen arbeitenden Logikeinheit 12 nicht nur Schaltfunktionen aufgrund von ja/nein Befehlen durchgeführt werden. Dieses so beeinflußte Signal 13 wird gegebenenfalls über einen Speicher 27 für das beeinflußte Signal 13 der Einrichtung zur Meßwertverarbeitung 23 zugeführt.

In der Einrichtung zur Meßwertverarbeitung 23 wird nunmehr in Abhängigkeit des beeinflußten Signals 13 die Unwucht nach Lage und Größe für den rotierbaren Körper 10 bestimmmt und beispielsweise an einer Polaranzeige 29 angezeigt oder auch der Bearbeitungseinrichtung 26 direkt zugeführt, um den rotierbaren Körper 10 unwuchtfrei durch Materialzugabe oder -abnahme in mindestens einer Ebene zu erhalten.

Der Einsatz von Speichern 27, 28 und 31 kann im Ausführungsbeispiel gemäß Figur 3b dazu dienen, an getrennten Plätzen und damit auch zu verschiedenen Zeiten die Unwuchtmessung und den erforderlichen Unwuchtausgleich am rotierbaren Körper 10 durchzuführen. Auch ist es mit derartigen Speichern möglich, Einfluß auf eventuell mögliche unterschiedliche Bereitstellungszeiten der Signale zu nehmen.

## Patentansprüche

1. Verfahren zum Ausblenden nicht relevanter Meßwerte für ein aus einer Vielzahl von Einzelmeßwerten bestehendes Unwuchtmeßsignal, dadurch gekennzeichnet, daß eine den etwaigen zu erwartenden Verlauf des Unwuchtmeßsignals erkennende, mit Fuzzyerkenntnissen arbeitende Logik (12) im Falle stark abweichender Einzelmeßwerte diese als nicht relevant ausblendet.

2. Verfahren nach Anspruch 1, dadurch gekennzeichnet, daß die mit Fuzzyerkenntnissen arbeitende Logik (12) eine unscharfe Bandbreite von Meßwerten vom etwaigen Verlauf des Unwuchtmeßsignals zuläßt.

3. Verfahren nach Anspruch 1 und/oder 2, dadurch gekennzeichnet, daß die mit Fuzzyerkenntnissen arbeitende Logik (12) nach Beginn der Messung während eines im wesentlichen zu erwartenden konstanten Amplitudenverlaufs der zeitlich nacheinander folgenden Meßwerte in Abhängigkeit der einzelnen Amplitudengrößen ein Unschärfeauswahlverfahren durchführt, ob der einzelne Amplitudenmeßwert zur Bildung des Unwuchtmeßsignals zugelassen wird.

4. Verfahren nach Anspruch 3, dadurch gekennzeichnet, daß der Meßwert in Abhängigkeit der mit Fuzzyerkenntnissen arbeitenden Logik (12) noch modifiziert wird.

5. Schaltungsanordnung zur Bestimmung der einem rotierbaren Körper (10) anhaftenden Unwucht in mindestens einer Meßebene mit mindestens einem Schwingungsumformer (5,8) und einem Winkellagengeber (19) zur Verarbeitung des Unwuchtmeßsignals, einer Anzeigeeinrichtung zur Anzeige der wucht nach Lage und Größen (24,25) und/oder eine tungseinrichtung (26) zur Weiterverarbeitung der Unwucht zur Durchführung des Verfahrens nachirgend einem der vorhergehenden Ansprüche, dadurch gekennzeichnet, daß von der mit Fuzzyerkenntnissen arbeitenden Logikeinheit (12) die vom Schwingungsumformer (5,8) abgegebenen Unwuchtmeßsignale (6,9) unmittelbar verarbeitet werden.

6. Schaltungsanordnung zur Bestimmung der einem rotierbaren Körper (10) anhaftenden Unwucht in mindestens einer Meßebene mit mindestens einem Schwingungsumformer (5,8) und einem Winkellagengeber (19) zur Verarbeitung des Unwuchtmeßsignals, einer Anzeigeeinrichtung zur Anzeige der wucht nach Lage und Größe (24,25,29) und/oder einer beitungseinrichtung (26) zur Weiterverarbeitung der Unwucht, zur Durchführung des Verfahrens nach einem der Ansprüche 1 bis 4, dadurch gekennzeichnet, daß zwischen dem Ausgang des Schwingungsumformers- und dem Eingang der mit Fuzzyerkenntnissen arbeitenden Logikeinheit (12) mindestens ein Anpassverstärker (14) für das Unwuchtmeßsignal (6,9) vorhanden ist.

7. Schaltungsanordnung nach Anspruch 6, dadurch gekennzeichnet, daß nach dem mindestens ein Anpassverstärker (14) eine weitere Einrichtung zur Vorfilterung (17) vorgesehen ist und daß der das Unwuchtmeßsignal (6,9) abgegebene Ausgang dieser Einrichtung (17) mit der mit Fuzzyerkenntnissen arbeitenden Logikeinheit (12) zur Verarbeitung dieses Unwuchtmeßsignals verbunden ist.

8. Schaltungsanordnung zur Bestimmung der einem rotierbaren Körper (10) anhaftenden Unwucht in mindestens einer Meßebene mit mindestens einem Schwingungsaufnehmer (5,8) und einem Winkellagengeber (19) zur Verarbeitung des Unwuchtmeßsignals (6,9), einer Anzeigeeinrichtung zur Anzeige der Unwucht nach Lage und Größe (24,25,29) und/oder einer arbeitungseinrichtung (26) zur Weiterverarbeitung der Unwucht, zur Durchführung des Verfahrens nach einem der Ansprüche 1 bis 4, dadurch gekennzeichnet, daß die vom Schwingungsumformer (5,8) ausgehende Information zum einen über eine mit Fuzzyerkenntnissen arbeitenden Logikeinheit (12) geführt wird und anschließend an eine Einrichtung zur Meßwertverarbeitung (23) weiter gegeben wird und zum anderen die Information des Schwingungsumformers (5,8) über einen Anpassverstärker (14) und/oder einen Vorfilter (17) an die Einrichtung zur Meßwertverarbeitung (23) gegeben wird und daß die Meßwertverarbeitung (23) in Abhängigkeit der mit Fuzzyerkenntnissen beeinflußten Werte geschieht.

9. Schaltungsanordnung nach Anspruch 8, dadurch gekennzeichnet, daß je eine Speicheranordnung (27,28,31) zwischen den mit Fuzzyerkenntnissen aufbereiteten Werten, den über Anpassverstärker (14) und Vorfilter (17) kommenden Werten, den vom Winkellagengeber (19) kommenden Werten und der Einrichtung zur Meßwertverarbeitung (23) angeordnet ist.

## Claims

1. A process for the elimination of non-relevant measured values for an imbalance measurement signal comprising a plurality of individual measured values, characterised in that in the event of greatly deviating individual measured values a fuzzy logic unit (12), which recognises the possible, expected characteristic of the imbalance measurement signal, eliminates said greatly deviating individual measured values as non-relevant.

2. A process according to Claim 1, characterised in that the fuzzy logic unit (12) allows a fuzzy band width of measured values corresponding to the possible characteristic of the imbalance measurement signal.

3. A process according to Claim 1 and/or 2, characterised in that after the start of the measurement, during a substantially expected, constant amplitude characteristic of the consecutive measured values and in dependence upon the individual amplitude values, the fuzzy logic unit (12) carries out a fuzziness selection process which determines whether the individual amplitude measured value is allowed to form the imbalance measurement signal.

4. A process according to Claim 3, characterised in that the measured value is also modified in dependence upon the fuzzy logic unit (12).

5. A circuit arrangement for determining the imbalance of a rotatable body (10) in at least one measurement plane, comprising at least one vibration transducer (5, 8) and an angular position sensor (19) for the processing of the imbalance measurement signal, a display device for displaying the imbalance in terms of position and magnitude (24, 25) and/or a processing device (26) for the further processing of the imbalance, for the implementation of the process according to any one of the preceding claims, characterised in that the imbalance measurement signals (6, 9) emitted from the vibration transducer (5, 8) are directly processed by the fuzzy logic unit (12).

6. A circuit arrangement for determining the imbalance of a rotatable body (10) in at least one measurement plane, comprising at least one vibration transducer (5, 8) and an angular position sensor (19) for the processing of the imbalance measurement signal, a display device for displaying the imbalance in terms of position and magnitude (24, 25, 29) and/or a processing device (26) for the further processing of the imbalance, for the implementation of the process according to one of Claims 1 to 4, characterised in that at least one matching amplifier (14) for the imbalance measurement signal (6, 9) is present between the output of the vibration transducer and the input of the fuzzy logic unit (12).

7. A circuit arrangement according to Claim 6, characterised in that a further preliminary filtering device (17) is provided downstream of the at least one matching amplifier (14), and that the output of this device (17), which emits the imbalance measurement signal (6, 9), is connected to the fuzzy logic unit (12) for the processing of this imbalance measurement signal.

8. A circuit arrangement for determining the imbalance of a rotatable body (10) in at least one measurement plane, comprising at least one vibration sensor (5, 8) and an angular position sensor (19) for the processing of the imbalance measurement signal (6, 9), a display device for displaying the imbalance in terms of position and magnitude (24, 25, 29), and/or a processing device (26) for the further processing of the imbalance, for the implementation of the process according to one of Claims 1 to 4, characterised in that on the one hand the information output from the vibration transducer (5, 8) is fed across a fuzzy logic unit (12) and then is forwarded to a measured value processing device (23) and on the other hand the information from the vibration transducer (5, 8) is fed via a matching amplifier (14) and/or a preliminary filter (17) to the measured value processing device (23), and that the measured value processing (23) takes place in dependence upon the fuzzy logic values.

9. A circuit arrangement according to Claim 8, characterised in that a storage arrangement (27, 28, 31) is in each case provided between the fuzzy logic values, the values from the matching amplifier (14) and the preliminary filter (17), the values from the angular position sensor (19) and the measured value processing device (23).

## Revendications

1. Procédé d'élimination de valeurs de mesure non utiles d'un signal de mesure de balourd constitué d'une pluralité de valeurs de mesure individuelles, caractérisé en ce qu'une logique floue (12), reconnaissant l'évolution éventuelle à attendre du signal de mesure de balourd et travaillant avec les connaissances de la logique floue, dans le cas où des valeurs de mesure individuelles présentent de forts écarts, élimine celles-ci en tant que valeurs non utiles.

2. Procédé selon la revendication 1, caractérise en ce que la logique floue (12) admet une largeur de bande non nette de la part des valeurs de mesure, par rapport à l'évolution éventuelle du signal de mesure de balourd.

3. Procédé selon la revendication 1 et/ou la revendication 2, caractérisé en ce que la logique floue (12), après le début de la mesure, met en oeuvre pendant la manifestation d'une amplitude que l'on s'attend à être pratiquement constante, pour les valeurs de mesure se succédant temporellement, en fonction des différentes valeurs d'amplitude, une procédure d'élimination pour absence de netteté, déduisant si la valeur de mesure d'amplitude spécifique est admise pour la constitution du signal de mesure de balourd.

4. Procédé selon la revendication 3, caractérisé en ce que la valeur de mesure est encore soumise à une modification en fonction de la logique floue (12).

5. Circuit de détermination du balourd affectant un corps (10) tournant, dans au moins un plan de mesure, avec au moins un convertisseur d'oscillation (5, 8) et un transmetteur de position angulaire (19), pour traiter le signal de mesure de balourd, un dispositif d'affichage pour afficher la position et l'intensité (24, 25) du balourd et/ou un dispositif de traitement (26) destiné à retravailler le balourd pour la mise en oeuvre du procédé selon l'une quelconque des revendications précédentes, caractérisé en ce que les signaux de mesure de balourd (6, 9) fournis par le convertisseur de vibrations (5, 8) sont directement traités par l'unité à logique floue (12).

6. Circuit de détermination du balourd affectant un corps (10) tournant, dans au moins un plan de mesure, avec au moins un convertisseur d'oscillations (5, 8) et un transmetteur de position angulaire (19), pour traiter le signal de mesure de balourd, un dispositif d'affichage pour afficher la position et l'amplitude (24 , 25, 29) du balourd, et/ou un dispositif de traitement (26) destiné à retravailler le balourd, pour la mise en oeuvre du procédé selon l'une des revendications 1 à 4, caractérisé en ce qu'entre la sortie du convertisseur d'oscillations et l'entrée de l'unité logique floue (12) est prévu au moins un amplificateur d'adaptation (14) destiné au signal de mesure de balourd (6,9)

7. Circuit selon la revendication 6, caractérisé en ce que, en aval d'au moins un amplificateur d'adaptation (14), est prévu un dispositif de pré-filtrage (17) supplémentaire et en ce que la sortie ayant fourni le signal de mesure de balourd (6, 9) de ce dispositif (17) est reliée à l'unité à logique floue (12), en vue de traiter ce signal de mesure de balourd.

8. Circuit de détermination du balourd affectant un corps (10) tournant dans au moins un plan de mesure, avec au moins un convertisseur d'oscillations (5, 8) et un capteur de position angulaire (19) pour traiter le signal de mesure de balourd (6, 9), un dispositif d'affichage pour afficher la position et l'amplitude (24, 25, 29) du balourd, et/ou un dispositif de traitement (26) destiné à retravailler le balourd, pour la mise en oeuvre du procédé selon l'une des revendications 1 à 4, caractérisé en ce que l'information issue du convertisseur d'oscillations (5, 8) est d'une part amenée à une unité à logique floue (12); puis est refournie à un dispositif de transformation de valeur de mesure (23) et, d'autre part, l'information du convertisseur d'oscillations (5, 8) est fournie, par l'intermédiaire d'un amplificateur d'adaptation (14) et/ou un pré-filtre (17), au dispositif de traitement des valeurs de mesure (23), et le traitement des valeurs de mesure (23) se faisant en fonction des valeurs influencées par l'application de la logique floue.

9. Circuit selon la revendication 8, caractérisé en ce qu'un dispositif de mémorisation (27, 28, 31) est respectivement disposé entre les valeurs traitées par la logique floue, les valeurs venant par l'intermédiaire de l'amplificateur d'adaptation (14) et le pré-filtre (17), les valeurs venant du capteur de position angulaire (19) et le dispositif de transformation des valeurs de mesure (23).
